# EUROPÄISCHE PATENTANMELDUNG

(11) **EP 3 211 281 A1**
(43) Veröffentlichungstag der Anmeldung: **30.08.2017**
(21) Anmeldenummer: 16157098.1
(22) Anmeldetag: 24.02.2016
(51) Int. Cl.: F16K 51/02, F16K 3/10, F16K 3/314, F16K 31/04

(54) **VAKUUMVENTIL ZUM SCHLIESSEN EINES FLIESSWEGS MIT ZWEITEILIGEM VENTILTELLER**

(71) Anmelder: VAT Holding AG, 9469 Haag (CH)
(72) Erfinder: BÖHM, Christoph, CH-9473 Gams (CH); TRONCA, Michele, CH-8645 Jona (CH); WEISS, Wolfgang, A-6971 Hard (AT)
(74) Vertreter: Kaminski Harmann

(57) **Zusammenfassung**

Die Erfindung betrifft ein Vakuumventil zum im Wesentlichen gasdichten Unterbrechen eines Fliesswegs, mit einem Ventilgehäuse (1) mit einer ersten Öffnung (3) mit einer Öffnungsachse (4) und einem die erste Öffnung (3) umschliessenden Ventilsitz (5). Ferner ist ein Ventilteller (8) vorgesehen mit einem ersten Tellerabschnitt (9) mit einer äusseren Begrenzung (9a) und einem zweiten Tellerabschnitt (11), der innerhalb der äusseren Begrenzung (9a) in Richtung parallel zur Öffnungsachse (3) linear bewegbar auf dichte Weise gelagert ist. Ein Antrieb, der mit dem ersten Tellerabschnitt (9) verbunden ist, stellt eine gesteuerte Beweglichkeit des Ventiltellers (8) bereit. Der Ventilsitz (5) weist eine axial in Richtung des Ventiltellers weisende Dichtfläche (14) auf. Der erste Tellerabschnitt (9) weist eine axial in Richtung des Ventilsitzes (5) weisende erste Auflagefläche (15) auf, die derart ausgebildet ist, dass in der Geschlossenstellung (C) in einem ersten Kontaktbereich ein axial dichtender Kontakt mit der Dichtfläche (14) besteht. Die äussere Begrenzung (9a) weist eine radial nach innen weisende Innenfläche (16) auf. Der zweite Tellerabschnitt (11) hat eine radial nach aussen weisende Aussenfläche (17), die derart ausgebildet ist, dass ein radial dichtender Kontakt mit der Innenfläche (16) über einen zweiten Kontaktbereich besteht. Zumindest für bestimmte radiale Winkel um ein Zentrum des Ventiltellers (8) ist ein erster radialer Abstand von dem Zentrum bis zur ersten Auflagefläche kleiner als ein zweiter radialer Abstand von dem Zentrum bis zum zweiten Kontaktbereich.

## Beschreibung

Die Erfindung betrifft ein Ventil zum im Wesentlichen gasdichten Unterbrechen eines Fliesswegs gemäss dem Oberbegriff des Anspruchs 1. Derartige Ventile, insbesondere in Form von Pendelventilen bzw. Schieberventilen, werden vor allem in der Vakuumtechnik verwendet.

Allgemein sind Vakuumventile zum im Wesentlichen gasdichten Schliessen eines Fliesswegs, Strömungswegs oder Strahlengangs, der durch eine in einem Ventilgehäuse ausgeformte Öffnung führt, in unterschiedlichen Ausführungsformen aus dem Stand der Technik bekannt. Vakuumschieberventile kommen insbesondere im Bereich der IC- und Halbleiterfertigung aber beispielsweise auch im Bereich der Elektronenmikroskopie, die ebenfalls in einer geschützten Atmosphäre möglichst ohne das Vorhandensein verunreinigender Partikel stattfinden muss, zum Einsatz.

Beispielsweise durchlaufen in einer Fertigungsanlage für Halbleiter-Wafer oder Flüssigkristall-Substrate die hochsensiblen Halbleiter- oder Flüssigkristall-Elemente sequentiell mehrere Prozesskammern, in denen die innerhalb der Prozesskammer befindlichen Halbleiterelemente mittels jeweils einer Bearbeitungsvorrichtung bearbeitet werden. Sowohl während des Bearbeitungsprozesses innerhalb der Prozesskammer, als auch während des Transports von Prozesskammer zu Prozesskammer müssen sich die hochsensiblen Halbleiterelemente stets in geschützter Atmosphäre - insbesondere im Vakuum - befinden. Die Prozesskammern sind beispielsweise über Verbindungsgänge miteinander verbunden, wobei die Prozesskammern mittels Vakuumschieberventile zum Transfer der Teile von der einen zur nächsten Prozesskammer geöffnet und im Anschluss zur Durchführung des jeweiligen Fertigungsschritts gasdicht verschlossen werden können. Derartige Ventile werden aufgrund des beschriebenen Anwendungsgebiets auch als Vakuum-Transferventile und aufgrund ihres rechteckigen Öffnungsquerschnitts auch als Rechteckschieber bezeichnet.

Peripherieventile werden insbesondere zur Steuerung oder Regelung des Gasflusses zwischen einer Vakuumkammer und einer Vakuumpumpe oder einer weiteren Vakuumkammer eingesetzt. Peripherieventile befinden sich beispielsweise innerhalb eines Rohrsystems zwischen einer Prozess-Vakuumkammer oder einer Transferkammer und einer Vakuumpumpe, der Atmosphäre oder einer weiteren Prozess-Vakuumkammer. Der Öffnungsquerschnitt derartiger Ventile, auch Pumpenventile genannt, ist in der Regel kleiner als bei einem Vakuum-Transferventil. Da Peripherieventile abhängig vom Einsatzgebiet nicht nur zum vollständigen Öffnen und Schliessen einer Öffnung, sondern auch zum Steuern oder Regeln eines Durchflusses durch kontinuierliches Verstellen des Öffnungsquerschnitts zwischen eine vollständigen Offenstellung und einer gasdichten Geschlossenstellung eingesetzt werden, werden sie auch als Regelventile bezeichnet. Ein mögliches Peripherieventil zur Steuerung oder Regelung des Gasflusses ist das Pendelventil.

Bei einem typischen Pendelventil, wie beispielsweise aus der US 6,089,537 (Olmsted) bekannt, wird in einem ersten Schritt ein in der Regel runder Ventilteller über eine in der Regel ebenfalls runde Öffnung von einer die Öffnung freigebenden Stellung in eine die Öffnung überdeckende Zwischenstellung rotatorisch geschwenkt. Im Falle eines Schieberventils, wie beispielsweise in der US 6,416,037 (Geiser) oder der US 6,056,266 (Blecha) beschrieben, ist der Ventilteller, wie auch die Öffnung, meist rechteckig ausgebildet und wird in diesem ersten Schritt linear von einer die Öffnung freigebenden Stellung in eine die Öffnung überdeckende Zwischenstellung geschoben. In dieser Zwischenstellung befindet sich der Ventilteller des Pendel- oder Schieberventils in einer beabstandeten Gegenüberlage zu dem die Öffnung umgebenden Ventilsitz. In einem zweiten Schritt wird der Abstand zwischen dem Ventilteller und dem Ventilsitz verkleinert, so dass der Ventilteller und der Ventilsitz gleichmässig aufeinander gedrückt werden und die Öffnung im Wesentlichen gasdicht verschlossen wird. Diese zweite Bewegung erfolgt vorzugsweise im Wesentlichen in eine senkrechte Richtung zum Ventilsitz. Die Abdichtung kann z.B. entweder über einen auf der Verschlussseite des Ventiltellers angeordneten Dichtungsring, der auf den die Öffnung umlaufenden Ventilsitz gepresst wird, erfolgen, oder über einen Dichtungsring auf dem Ventilsitz, gegen den die Verschlussseite des Ventiltellers gedrückt wird. Durch den in zwei Schritten erfolgenden Schliessvorgang wird der Abdichtring zwischen dem Ventilteller und dem Ventilsitz kaum Scherkräften, die den Abdichtring zerstören würden, unterworfen, da die Bewegung des Ventiltellers im zweiten Schritt im Wesentlichen geradlinig senkrecht auf den Ventilsitz stattfindet.

Aus dem Stand der Technik sind unterschiedliche Antriebssysteme zur Erzielung dieser Kombination einer beim Pendelventil rotatorischen und beim Schieberventil translatorischen Bewegung des Ventiltellers parallel über die Öffnung und einer im Wesentlichen translatorischen Bewegung senkrecht auf die Öffnung bekannt, beispielsweise aus der US 6,089,537 (Olmsted) für ein Pendelventil und aus der US 6,416,037 (Geiser) für ein Schieberventil.

Das Anpressen des Ventiltellers auf den Ventilsitz muss derart erfolgen, dass sowohl die geforderte Gasdichtigkeit innerhalb des gesamten Druckbereichs sichergestellt ist, als auch eine Beschädigung des Abdichtmediums, insbesondere des Abdichtrings in Form eines O-Rings oder andere Formen von Dichtungen, durch zu grosse Druckbeanspruchung vermieden wird. Um dies zu gewährleisten, sehen bekannte Ventile eine in Abhängigkeit von der zwischen den beiden Ventiltellerseiten herrschenden Druckdifferenz geregelte Anpressdruckregelung des Ventiltellers vor. Besonders bei grossen Druckschwankungen oder dem Wechsel von Unterdruck auf Überdruck, oder umgekehrt, ist eine gleichmässige Kraftverteilung entlang des gesamten Umfangs des Abdichtrings jedoch nicht immer gewährleistbar. Generell wird angestrebt, den Abdichtring von Abstützkräften, die sich aus dem an das Ventil anliegenden Druck ergeben, zu entkoppeln. In der US 6,629,682 (Duelli) wird hierzu ein Vakuumventil mit einem Abdichtmedium vorgeschlagen, das sich aus einem Abdichtring und einem danebenliegenden Abstützring zusammensetzt, so dass der Abdichtring von Abstützkräften im Wesentlichen befreit ist.

Um die geforderte Gasdichtigkeit, gegebenenfalls sowohl für Über- als auch Unterdruck, zu erreichen, sehen zusätzlich oder alternativ zum zweiten Bewegungsschritt manche bekannte Pendelventile oder Schieberventile einen senkrecht zum Ventilteller verschiebbaren, die Öffnung umgebenden Ventilring vor, der zum gasdichten Schliessen des Ventils auf den Ventilteller gedrückt wird. Derartige Ventile mit relativ zum Ventilteller aktiv verschiebbaren Ventilringen sind beispielsweise aus der DE 1 264 191 B1, der DE 34 47 008 C2, der US 3,145,969 (von Zweck) und der DE 77 31 993 U bekannt. In der US 5,577,707 (Brida) wird ein Pendelventil mit einem eine Öffnung aufweisenden Ventilgehäuse und einem parallel über die Öffnung schwenkbaren Ventilteller zum Steuern eines Durchflusses durch die Öffnung beschrieben. Ein Ventilring, der die Öffnung umschliesst, ist senkrecht in Richtung zum Ventilteller mittels mehrerer Federn und Druckluftzylinder aktiv bewegbar. Eine mögliche Weiterentwicklung dieses Pendelventils wird in der US 2005/0067603 A1 (Lucas et al.) vorgeschlagen.

Aus der EP 2 551 564 A1 (VAT Holding AG) ist ein Vakuumventil in unterschiedlichen Ausführungsformen bekannt, die einen zweigeteilten Ventilteller umfassen. Ein erster Tellerabschnitt, der eine radiale Dichtung trägt, besitzt eine Öffnung. Ein zweiter Tellerabschnitt ist ebenfalls radial abgedichtet relativ zu dem ersten Tellerabschnitt beweglich angeordnet. Der erste Tellerabschnitt ist mittels des Aktors gegen den Ventilsitz anpressbar, so dass ein dichtender Kontakt entsteht, wobei sich der zweite Tellerabschnitt - insbesondere im Falle eines ventilsitzseitigen Überdrucks - gegebenenfalls auf einer gegenüberliegenden Ventilgehäuseseite abstützt.

Nachteilig an einer solchen Ausführungsform kann insbesondere sein, dass bei einem erhöhten Überdruck in einem abzudichtenden Volumen zwar der zweite Tellerabschnitt auf einer gegenüberliegenden Ventilgehäuseseite abstützt, jedoch der erste Tellerabschnitt eine reduzierte Dichtwirkung aufweist, da auch dieser in Richtung des zweiten Tellerabschnitts gedrückt wird und dadurch in eine Offenstellung gebracht werden kann. Die Verlässlichkeit einer Abdichtung ist insbesondere bei hohen Differenzdrücken oder starken Druckschwankungen damit reduziert.

Es ist daher Aufgabe der Erfindung, die oben beschriebenen Probleme zu lösen und ein möglichst einfach und kompakt aufgebautes Ventil der eingangs genannten Art, das auch beidseitig wirkenden hohen Druckbelastungen standzuhalten vermag und sich durch einen geringen Dichtungsverschleiss, selbst bei hohen Differenzdrücken und Druckschwankungen auszeichnet, zur Verfügung zu stellen.

Insbesondere ist es eine Aufgabe der Erfindung, ein Vakuumventil bereitzustellen, welches zum einen einen konstruktiv einfachen Aufbau bietet und zum zweiten eine verbesserte Dichtwirkung bei grossen Differenzdrücken und insbesondere Druckschwankungen bereitstellt.

Diese Aufgaben werden durch die Verwirklichung der kennzeichnenden Merkmale der unabhängigen Ansprüche gelöst. Merkmale, die die Erfindung in alternativer oder vorteilhafter Weise weiterbilden, sind den abhängigen Patentansprüchen zu entnehmen.

Die Erfindung beruht darauf, einen zumindest zweiteiligen Ventilteller mit einem ersten, äusseren Tellerabschnitt und einen zweiten, inneren Tellerabschnitt vorzusehen und den ersten Tellerabschnitt axial dichtend gegenüber dem Ventilsitz und den zweiten Tellerabschnitt radial dichtend gegenüber dem ersten Abschnitt auszugestalten. Der erste Tellerabschnitt ist über eine axial wirkende Hauptdichtung gasdicht mit dem Ventilsitz des Ventilgehäuses in Kontakt bringbar. Der innerhalb des ersten Tellerabschnitts angeordnete zweite Tellerabschnitt ist relativ zum äusseren Tellerabschnitt auf dichtende - insbesondere gasdichtende - Weise axial beweglich gelagert, wobei zwischen den Tellerabschnitten eine radial wirkende Zusatzdichtung vorgesehen ist. In der Geschlossenstellung des Ventils wirkt eine Druckdifferenz am Ventilteller im Wesentlichen auf den beweglichen innere Tellerabschnitt und der innere Tellerabschnitt stützt sich im Wesentlichen entkoppelt von dem äusseren Tellerabschnitt direkt oder indirekt auf das Ventilgehäuse ab.

Zudem weist die Hauptdichtung im Vergleich zur Zusatzdichtung zumindest teilweise einen grösseren Radius auf, so dass ein betreffender Abschnitt der Hauptdichtung radial weiter entfernt von einem Zentrum des Ventiltellers liegt. Hierdurch und durch eine entsprechende geometrische Ausgestaltung der Tellerabschnitte ist gemäss der Erfindung ein Bereich zwischen den Tellerabschnitten definiert, der bei Vorliegen eines relativen Überdrucks auf Seiten des Ventilsitzes eine Erzeugung einer Kraft auf den ersten Tellerabschnitt in Richtung der axialen Dichtung bewirkt, wobei der zweite Tellerabschnitt eine axiale Abstützung des Ventiltellers bereitstellt. Damit kann eine verlässliche Beibehaltung der Dichtwirkung auch bei einem vorherrschenden solchen Überdruck gewährleistet sein. Ausserdem wirkt weder der herrschende Differenzdruck, noch ein Anpressdruck auf den Antrieb des Ventiltellers, so dass weder der Antrieb, noch die Verbindung zwischen dem Antrieb und dem äusseren Tellerabschnitt hohen Kräften ausgesetzt ist. Dies ermöglicht einen kompakten und einfachen Aufbau des Ventils mit verhältnismässig wenigen Bauteilen.

Das erfindungsgemässe Vakuumventil zum im Wesentlichen gasdichten Unterbrechen eines Fliesswegs umfasst ein Ventilgehäuse mit einer ersten Wand, die eine erste Öffnung für den Fliessweg aufweist. Die erste Öffnung hat eine geometrische Öffnungsachse und einen Ventilsitz, der die erste Öffnung umschliesst. In anderen Worten umgibt der Ventilsitz die erste Öffnung. Die erste Öffnung und der Ventilsitz befinden sich auf einer ersten Seite des Ventilgehäuses. Beispielsweise ist die erste Seite diejenige Seite, auf welcher eine Vakuumpumpe zum Evakuieren einer Vakuumkammer angeschlossen ist, während die zweite Seite des Ventilgehäuses zur Vakuumkammer führt. Selbstverständlich sind auch andere Anwendungen oder Anordnungen möglich. Die erste Öffnung hat beispielsweise einen kreisförmigen oder ovalen Querschnitt oder einen rechteckigen Querschnitt mit abgerundeten Ecken. Die geometrische Öffnungsachse ist insbesondere die Mittelachse der ersten Öffnung und wird beispielsweise durch den Längsverlauf der Öffnung, durch den Verlauf eines an der Öffnung angeordneten Anschlusses, durch die Verbindungslinie mit einer allfälligen zweiten Öffnung des Ventilgehäuses oder durch die Fläche des Ventilsitzes definiert. Unter einem Ventilsitz ist allgemein funktional ein als Dichtfläche wirkender Abschnitt in der ersten Wand zu verstehen, auf dem eine weitere als Dichtfläche wirkende Fläche (Auflagefläche) aufsetzen kann. Das Ventilgehäuse kann auch alleine von der Wand gebildet werden. Der Fliessweg ist der reguläre, sperrbare Strömungsweg eines gasförmigen oder flüssigen Mediums durch die erste Öffnung, gegebenenfalls eine zweite Öffnung und das Ventil.

Ausserdem umfasst das Ventil einen Ventilteller, mittels welchem die erste Öffnung verschlossen und wieder geöffnet werden kann. Der Ventilteller besitzt beispielsweise einen runden, ovalen oder rechteckigen Querschnitt. Die Abmessung des Ventiltellers ermöglicht ein Verschliessen der ersten Öffnung durch Überlappen und Aufsetzen auf die erste Öffnung und deren Ventilsitz. Der Ventilteller ist mindestens zweiteilig ausgebildet und gliedert sich in zwei innerhalb eines Bewegungsbereichs axial relativ zueinander beweglichen Komponenten, nämlich einen ersten, äusseren Tellerabschnitt und einen zweiten, inneren Tellerabschnitt.

Wenn im Rahmen der Erfindung von radialen und axialen Richtungen und Dichtwirkungen die Rede ist, bezieht sich dies allgemein auf Richtungen im Wesentlichen senkrecht oder quer zur geometrischen Öffnungsachse bzw. im Wesentlichen parallel zur Öffnungsachse. Somit sind alle Richtungen bzw. Geraden, welche im Wesentlichen auf einer Ebene, zu welcher die Öffnungsachse eine geometrische Normale bildet, liegen, als radiale Richtungen bzw. Geraden zu verstehen, selbst wenn sie nicht direkt auf die oder weg von der Öffnungsachse weisen bzw. die Öffnungsachse schneiden, sondern beispielsweise windschief zu dieser verlaufen. Hingegen sind alle Richtungen bzw. Geraden, welche im Wesentlichen parallel zu der Öffnungsachse verlaufen, als axiale Richtungen bzw. Geraden zu verstehen. Somit bezieht sich der Begriff "radial" nicht nur auf einen kreisförmigen Querschnitt der Öffnung oder des Ventiltellers einschliesslich der jeweiligen Abschnitte, sondern auch auf andere, beispielsweise rechteckige Querschnitte. In letzterem Fall ist unter radial beispielsweise eine Richtung von innen nach aussen, und umgekehrt, senkrecht bzw. quer zur Öffnungsachse und unter axial jede Richtung im Wesentlichen parallel zur Öffnungsachse zu verstehen. Bei beweglichen Komponenten, insbesondere dem Ventilteller, beziehen sich die axiale und radiale Richtung auf einen geschlossenen Zustand des Ventils.

Der erste Tellerabschnitt ist insbesondere ring- oder rahmenartig ausgebildet und weist eine äussere Begrenzung auf. Diese Begrenzung umschliesst oder umgibt den zweiten Tellerabschnitt, der geschlossen ausgebildet ist. Unter einem geschlossenen Tellerabschnitt ist zu verstehen, dass der zweite Tellerabschnitt gegebenenfalls gemeinsam mit anderen Komponenten eine geschlossene Fläche bildet, so dass der zweite Tellerabschnitt gemeinsam mit dem ersten Tellerabschnitt eine Verschlussfläche bildet, mittels welcher die erste Öffnung vollständig überdeckt und verschlossen werden kann.

Der zweite Tellerabschnitt ist innerhalb der äusseren Begrenzung des ersten Tellerabschnitts in Richtung parallel zur Öffnungsachse relativ zum ersten Tellerabschnitt zwischen einer eingefahrenen Stellung und einer ausgefahrenen Stellung linear bewegbar auf dichte, insbesondere gasdichte Weise, gelagert. In anderen Worten kann der zweite, innere Tellerabschnitt relativ zum ersten, äusseren Tellerabschnitt zwischen der eingefahrenen und der ausgefahren Stellung frei bewegt werden, wobei in und zwischen diesen Stellungen eine gasdichte Verbindung zwischen dem inneren und äusseren Tellerabschnitt besteht. Wiederum in anderen Worten ist der innere Tellerabschnitt innerhalb eines bestimmten Bewegungsbereichs in Richtung der Öffnungsachse vom äusseren Tellerabschnitt entkoppelt. Unter der eingefahrenen Stellung ist allgemein eine erste Stellung des inneren Tellerabschnitts relativ zum äusseren Tellerabschnitt zu verstehen, während unter der ausgefahrenen Stellung eine zweite solche Relativstellung zu verstehen ist. Vorzugsweise ist die eingefahrene Stellung diejenige Stellung, in welcher der innere Tellerabschnitt in seiner axialen Erstreckung weitgehend von dem äusseren Tellerabschnitt bzw. dessen äusserer Begrenzung rings herum umschlossen wird, während der innere Tellerabschnitt in der ausgefahrenen Stellung in seiner axialen Erstreckung nur teilweise davon umschlossen wird.

Die äussere Begrenzung des ersten Tellerabschnitts hat eine radial nach innen weisende und parallel zur Öffnungsachse verlaufende Innenfläche. Der zweite Tellerabschnitt hat eine mit der Innenfläche der äusseren Begrenzung korrespondierende, radial nach aussen weisende und parallel zur Öffnungsachse verlaufende Aussenfläche. Diese Aussenfläche und diese Innenfläche sind derart angeordnet und ausgebildet, dass über eine dazwischen liegende zweite Dichtung über einen zweiten Kontaktbereich ein radial dichtender Kontakt zwischen der Innenfläche des ersten Tellerabschnitts und der Aussenfläche des zweiten Tellerabschnitts besteht. Dieser radial dichtende Kontakt ist innerhalb des Bereichs zwischen der eingefahrenen Stellung und der ausgefahrenen Stellung gewährleistet. Wenn allgemein von einem Bereich zwischen zwei Stellungen die Rede ist, so sind auch diese beiden Stellungen allgemein mit eingeschlossen. Als zweiter Kontaktbereich ist der sich axial sowie radial erstreckende Bereich zu verstehen, über welchen hinweg ein dichtender Kontakt zwischen den Tellerabschnitten bestehen kann.

Die radial dichtende zweite Dichtung zwischen den Tellerabschnitten ist insbesondere als O-Ring oder aufvulkanisierte Dichtung ausgebildet. Diese zweite Dichtung kann entweder auf der Innenfläche der äusseren Begrenzung zum Herstellen des radial aussendichtenden Kontakts mit der Aussenfläche des zweiten Tellerabschnitts angeordnet sein, oder sie befindet sich auf der Aussenfläche des zweiten Tellerabschnitts zum Herstellen des radial innendichtenden Kontakts mit der Innenfläche der äusseren Begrenzung. Es ist jedoch auch möglich, dass diese Dichtung rein funktionell besteht und von einer dichtenden Führung der Aussenfläche in der Innenfläche gebildet wird.

Die zweite Dichtung ist insbesondere derart ausgebildet und angeordnet, dass der innere Tellerabschnitt bei NichtEinwirkung externer Kräfte, insbesondere ohne Einwirken eines Differenzdrucks am Ventil, abhängig von der Montagestellung des Ventils abgesehen von der Schwerkraft, in seiner jeweiligen axialen Stellung zwischen der eingefahrenen und ausgefahrenen Stellung innerhalb des äusseren Tellerabschnitts gehalten wird. In anderen Worten ist die zweite Dichtung vorzugsweise derart, dass sich der innere Tellerabschnitt nicht ohne mechanische oder Druckeinwirkung von aussen verstellt.

Die zweite Dichtung kann auch funktional von einer entsprechend dichten Führung der Aussenfläche in der Innenfläche gebildet werden.

Ausserdem umfasst das Ventil mindestens einen Antrieb, der mit dem ersten, äusseren Tellerabschnitt verbunden ist und mittels welchen dieser erste Tellerabschnitt und somit auch indirekt der zweite Tellerabschnitt sowohl durch eine Querbewegung, als auch durch eine Längsbewegung verstellt werden kann. Unter einer Querbewegung ist allgemein eine Bewegung im Wesentlichen senkrecht bzw. quer zur Öffnungsachse, also im Wesentlichen innerhalb einer Ebene, zu welcher die Öffnungsachse eine geometrische Normale bildet, zu verstehen, während die Längsbewegung eine Bewegung im Wesentlichen parallel zu der Öffnungsachse ist.

Der Antrieb ist zum einen derart ausgebildet, dass der Ventilteller zwischen einer Offenstellung und einer Zwischenstellung mittels der im Wesentlichen quer zur Öffnungsachse erfolgenden Querbewegung schwenkbar oder verschiebbar ist. Diese Bewegung kann also eine Schwenkbewegung, insbesondere auf einer Kreisbahn, eine Linearbewegung oder eine sonstige Bewegung im Wesentlichen quer zur Öffnungsachse sein. In der Offenstellung ist der Ventilteller in einem seitlich neben der ersten Öffnung angeordneten Verweilabschnitt positioniert und gibt die erste Öffnung und den Fliessweg frei. Dieser Verweilabschnitt kann ein entsprechender Abschnitt innerhalb des Ventilgehäuses, insbesondere ein Parkabschnitt für den Ventilteller, oder ein sonstiger abstrakter Abschnitt sein. In der Zwischenstellung ist der Ventilteller über der ersten Öffnung positioniert und überdeckt den Öffnungsquerschnitt der ersten Öffnung, wobei sich der Ventilteller in beabstandeter Gegenüberlage zum Ventilsitz befindet. In anderen Worten besteht in der Zwischenstellung in Richtung der Öffnungsachse ein Abstand zwischen dem Ventilteller und dem Ventilsitz. Somit wird die erste Öffnung in der Zwischenstellung vom Ventilteller zwar überdeckt, aber nicht gasdicht verschlossen.

Zum anderen ist der Antrieb derart ausgebildet, dass der Ventilteller zwischen der Zwischenstellung und einer Geschlossenstellung mittels der parallel zur Öffnungsachse erfolgenden Längsbewegung verschiebbar ist. In der Geschlossenstellung besteht ein die erste Öffnung dicht, insbesondere gasdicht schliessender und den Fliessweg unterbrechender dichter Kontakt zwischen dem ersten Tellerabschnitt und dem Ventilsitz. In anderen Worten ist der senkrechte Abstand zwischen dem Ventilteller und dem Ventilsitz in der Geschlossenstellung derart reduziert, dass zwischen dem äusseren Tellerabschnitt und dem Ventilsitz ein dichter Kontakt besteht und die erste Öffnung aufgrund der dichten Verbindung zwischen dem äusseren Tellerabschnitt und dem flächig geschlossenen inneren Tellerabschnitt vollständig dicht verschlossen wird. In der Geschlossenstellung wirkt eine Druckdifferenz am Ventilteller somit im Wesentlichen auf den bewegbaren zweiten, inneren Tellerabschnitt. Aufgrund der freien Beweglichkeit des zweiten Tellerabschnitts wird dieser bei Herrschen einer Druckdifferenz verschoben. Das Ventil und der Ventilteller sind derart ausgebildet, dass sich der zweite Tellerabschnitt in Richtung parallel zur Öffnungsachse im Wesentlichen entkoppelt von dem ersten Tellerabschnitt direkt oder indirekt auf das Ventilgehäuse abstützt. Somit wirkt die Differenzdruckkraft über den zweiten Tellerabschnitt im Wesentlichen auf das Ventilgehäuse.

Durch Einnehmen einer solchen Abstützposition des zweiten Tellerabschnitts wird ein sich axial ausdehnender Bereich zwischen dem ersten Tellerabschnitt und dem zweiten Tellerabschnitt freigegeben, der mit dem Volumen zur ersten Öffnung hin verbunden ist. Dieser Zwischenbereich ist insbesondere zumindest durch eine Stützfläche des ersten Tellerabschnitts und insbesondere die Innenfläche der äusseren Begrenzung definiert. Die Dichtung zwischen den Tellerabschnitten besteht dabei weiterhin. Bei Anliegen eines relativen Überdrucks und einer so erfolgenden Abstützung des zweiten Tellerabschnitts wird mittels des freigegebenen Bereichs eine axiale Kraft auf die Stützfläche des ersten Tellerabschnitts in Richtung hin zum Ventilsitz bewirkt. Diese Kraft entsteht aufgrund des in dem Zwischenbereich herrschenden relativen Überdrucks, der dadurch auf den ersten Tellerabschnitt axial in Richtung der ersten Seite bzw. der ersten Öffnung drückt.

Die Erfindung sieht damit weiters vor, dass der Ventilsitz eine axial in Richtung des Ventilsitzes weisende und quer zur Öffnungsachse verlaufende Dichtfläche aufweist. Der erste Tellerabschnitt hat eine axial in Richtung des Ventilsitzes weisende und quer zur Öffnungsachse verlaufende erste Auflagefläche. Diese erste Auflagefläche und diese Dichtfläche sind derart angeordnet und ausgebildet, dass in der Geschlossenstellung über eine dazwischen liegende erste Dichtung ein axial dichtender Kontakt zwischen der ersten Auflagefläche und der Dichtfläche besteht. Durch diesen axial dichtenden Kontakt zwischen dem ersten Tellerabschnitt und dem Ventilsitz erfolgt das gasdichte Schliessen lediglich durch Verschieben des ersten Tellerabschnitts mit dessen erster Auflagefläche auf die Dichtfläche des Ventilsitzes.

Der gasdichte Kontakt bleibt somit gewährleistet, solange die erste Auflagefläche, die Dichtfläche und die erste Dichtung in Kontakt gebracht sind.

Da erfindungsgemäss durch die strukturelle Ausgestaltung des Ventiltellers bei Vorliegen von Differenzdruckkräften der erste Tellerabschnitt und damit dessen erste Auflagefläche auf den Ventilsitz gedrückt werden, müssen zur Aufrechterhaltung der Dichtwirkung keine weiteren Kräfte durch den Antrieb und die Halterung aufgebracht werden oder davon aufgenommen werden.

Diese Wirkung wird dadurch erzeugt, dass für bestimmte radiale Winkel um ein Zentrum des Ventiltellers, insbesondere um ein Zentrum oder einen Mittelpunkt des ersten oder zweiten Tellerabschnitts, ein erster radialer Abstand von dem Zentrum bis zur ersten Auflagefläche (axiale Dichtung) kleiner ist als ein zweiter radialer Abstand von dem Zentrum bis zum zweiten Kontaktbereich (radiale Dichtung). In anderen Worten weist die radial ausgestaltete Dichtanordnung zumindest teilweise einen grösseren radialen Abstand zu einem durch das Ventilteller definierten Mittelpunkt auf, insbesondere in Geschlossenstellung definiert durch die Öffnungsachse, als die axial ausgestaltete Dichtanordnung. Im geschlossenen oder offenen Zustand des Ventils ist somit insbesondere die radiale Komponente des Abstands vom Zentrum zum ersten Kontaktbereich kleiner als die radiale Komponente des Abstands vom Zentrum zum zweiten Kontaktbereich.

Erst hierdurch kann sich durch entsprechende Ausformung der Tellerabschnitte seitens des ersten Tellerabschnitts eine Fläche ergeben, welche eine aus einem relativen Überdruck entstehende Kraft in axialer Richtung bewirkt, so dass der erste Tellerabschnitt auf den Ventilsitz gedrückt wird. Gleichzeitig ist eine axiale Abstützung des Ventiltellers auf das Ventilgehäuse in beide axialen Richtungen bereitgestellt. Zudem kann der Teller zwar zweiteilig, jedoch dabei vergleichsweise einfach, d.h. mit einer geringen Anzahl von Bauteilen konstruiert werden.

Durch diese Ausgestaltung können ferner der Ventilsitz und die Öffnungen des Ventils ebenso einfach ausgebildet werden, d.h. es sind generell keinerlei spezielle Topographien seitens des Ventilgehäuses erforderlich. Somit bleiben mit der vorgeschlagenen Lösung auch eine Regelung und ein Schliessen des Fliessweges in vorteilhafter Weise möglich.

Insbesondere kann der erste Tellerabschnitt mit dem mindestens einen Antrieb über einen derart seitlich an dem äusseren Tellerabschnitt angeordneten, sich senkrecht zur Öffnungsachse erstreckenden Arm verbunden sein, dass sich der Arm in der Geschlossenstellung ausserhalb des entlang der Öffnungsachse geometrisch projizierten Öffnungsquerschnitts der ersten Öffnung befindet. In anderen Worten kann auf eine rückseitig am Ventilteller angeordnete, insbesondere sternförmige Verstrebung, die den äusseren Tellerabschnitt mit dem Antrieb in einem zentrischen, nahe der Mittelachse der ersten Öffnung liegenden Bereich verbindet, wie es der Stand der Technik erfordert, verzichtet werden, da keine grossen Kräfte vom Antriebsarm aufgenommen werden müssen. Die Erfindung sieht vor, dass der Antriebsarm lediglich seitlich am äusseren Tellerabschnitt angeordnet ist.

Vorzugsweise ist die erste Dichtung auf der ersten Auflagefläche des ersten Tellerabschnitts zum Herstellen des axial dichtenden Kontakts mit der Dichtfläche des Ventilsitzes fixiert. Dies hat den Vorteil, dass sich die erste Dichtung bei vollständig geöffnetem Ventil ausserhalb des Fliessbereichs befindet und somit weitgehend vor Verunreinigungen, welche durch das Medium entstehen, die das Ventil durchströmen, geschützt ist. Alternativ besteht jedoch auch die Möglichkeit, dass die erste Dichtung auf der Dichtfläche des Ventilsitzes zum Herstellen des axial dichtenden Kontakts mit der ersten Auflagefläche des ersten Tellerabschnitts fixiert ist. Ausserdem ist es möglich, dass die erste Dichtung auf beiden Abschnitten angeordnet ist. Die erste Dichtung wird insbesondere von einem O-Ring, oder andere Formen von Dichtungen, welcher beispielsweise in einer Nut gehalten wird, oder einer aufvulkanisierten Dichtung gebildet.

Der erste, äussere Tellerabschnitt ist in einer Weiterbildung der Erfindung ringförmig ausgebildet, wobei der zweite, innere Tellerabschnitt die Form einer geschlossenen Kreisscheibe hat, insbesondere mit seitlichen Flanken in Form einer Zylindermantelfläche, auf welcher die Aussenfläche angeordnet ist. Vorzugsweise sind bei dieser oder einer allgemeinen Ausführungsform die Dichtfläche und die erste Auflagefläche, und/oder die Innenfläche und die Aussenfläche geometrische eine Kreisringfläche bzw. eine Kreiszylindermantelfläche. Alternativ besteht die Möglichkeit, dass es sich um eine allgemeine, parallel zu der Öffnungsachse erstreckende Zylindermantelfläche (bei Innenfläche und Aussenfläche) handelt, wobei die Grundlinie anstelle einer Kreisform auch eine ovale, polygonale oder sonstige Form haben kann.

Der erste Tellerabschnitt kann insbesondere ringförmig ausgebildet sein, wobei der Durchmesser der äusseren Begrenzung des ersten Tellerabschnitts grösser ist als der Durchmesser der ersten Auflagefläche des ersten Tellerabschnitts.

Insbesondere ist das Ventil ein Pendelventil, wobei der Antrieb vorzugsweise derart ausgebildet ist, dass der Ventilteller mittels der Querbewegung im Wesentlichen parallel über den Querschnitt der ersten Öffnung und senkrecht zur Öffnungsachse schwenkbar ist. Es ist jedoch auch möglich, dass das Ventil ein Schieberventil bzw. ein Transferventil z.B. des L-Typs ist.

Wie dargestellt wirkt in der Geschlossenstellung eine Druckdifferenz am Ventilteller im Wesentlichen auf den bewegbaren zweiten, inneren Tellerabschnitt, wobei sich der zweite Tellerabschnitt in Richtung parallel zur Öffnungsachse im Wesentlichen entkoppelt von dem ersten, äusseren Tellerabschnitt direkt oder indirekt auf das Ventilgehäuse abstützt.

Gemäss einer erfindungsgemässen Weiterbildung weist der erste Tellerabschnitt eine axial in eine Richtung zum zweiten Tellerabschnitt weisende (also weg von dem Ventilsitz und hin zu einer zweiten Seite des Ventilgehäuses) und quer zur Öffnungsachse verlaufende sowie zu der äusseren Begrenzung benachbarte Stützfläche auf, wobei die Stützfläche und der zweite Tellerabschnitt derart ausgeformt und angeordnet sind, dass in der Geschlossenstellung der innere Tellerabschnitt bei auf der ersten Seite der ersten Öffnung herrschendem relativem Unterdruck in der eingefahrenen Stellung auf der Stützfläche aufliegt.

Durch das Aufliegen des zweiten Tellerabschnitts wird bei einem Unterdruck auf der ersten Seite auch der erste Tellerabschnitt in Richtung des Ventilsitzes gedrückt und dadurch die Dichtwirkung der axialen Dichtung verstärkt.

Gemäss einer Ausführungsform der Erfindung definieren zumindest die Stützfläche und die der Stützfläche gegenüberliegende Unterseite des zweiten Tellerabschnitts, und insbesondere die Innenfläche, Begrenzungsflächen für einen Zwischenbereich, dessen Volumen in Abhängigkeit der Stellung des zweiten Tellerabschnitts bestimmt ist, wobei das Volumen in eingefahrener Stellung minimal, insbesondere Null, ist und das Volumen in ausgefahrenen Stellung maximal ist. Das Volumen ist in Geschlossenstellung mit der ersten Öffnung verbunden. Damit öffnet sich bei einem Anliegen eines relativen Überdrucks auf der ersten Seite der Zwischenbereich entsprechend und eine Wirkung des Überdrucks wird auch in diesem Zwischenbereich bereitgestellt. Als Resultat entfaltet der Druck dort eine Kraft in axialer Richtung. Die Kraft wirkt auf die Stützfläche und drückt den ersten Tellerabschnitt in Richtung des Ventilsitzes.

Die Stützfläche ist insbesondere in radialer Richtung zwischen der ersten Dichtung und der zweiten Dichtung ausgeformt, so dass eine entsprechende Anpressung des ersten Tellerabschnitts an den Ventilsitz bereitgestellt ist.

Insbesondere überschneiden sich die Stützfläche und die erste Auflagefläche in radialer Richtung.

Der erste und der zweite Tellerabschnitt sind vorzugsweise so ausgeformt, dass das Volumen des Zwischenbereichs zum im Wesentlichen Teil radial weiter beabstandet zum Zentrum ist als die erste Dichtung.

Die Stützfläche ist ferner insbesondere rechtwinklig zur äusseren Begrenzung angeordnet sind. Hierbei bildet die äussere Begrenzung zumindest in einer ausgefahrenen Stellung eine radiale Begrenzung des Zwischenbereichs.

In einer erfindungsgemässen Ausführungsform des Ventiltellers weist der zweite Tellerabschnitt an seiner axial zum Ventilsitz weisenden Unterseite eine Ausnehmung auf. Hinzu kann die Ausnehmung sich radial derart erstreckend ausgestaltet sein, dass diese in radialer Richtung zumindest teilweise mit sowohl der Stützfläche als auch in Geschlossenstellung mit dem Öffnungsquerschnitt der ersten Öffnung überlappt, insbesondere wobei die Ausnehmung im zweiten Tellerabschnitt umlaufend ausgeformt ist. Es versteht sich, dass die Ausnehmung eine alternative Form, Dimensionen und/oder Anordnung aufweisen kann.

Durch eine solche Anordnung besteht bereits in Geschlossenstellung und in eingefahrener Stellung des zweiten Tellerabschnitts eine Verbindung zwischen der Stützfläche und der ersten Öffnung. Eventuell auftretende Druckschwankungen wirken somit unmittelbar auch an der Stützfläche und erzeugen - im Falle von Überdrücken an der ersten Seite - ebenso unmittelbar entsprechende Anpresskräfte auf den ersten Tellerabschnitt in axialer Richtung (in Richtung des Ventilsitzes). Dies hat zur Folge, dass auch bei starken Druckschwankungen eine Dichtwirkung der ersten Dichtung gewährleistet bleibt.

Gemäss einer erfindungsgemässen Weiterbildung weist das Ventilgehäuse auf einer der ersten Seite beabstandet gegenüberliegenden zweiten Seite eine zweite Wand auf. In dieser zweiten Wand ist in beabstandeter, im Wesentlichen paralleler Gegenüberlage zur ersten Wand und zur ersten Öffnung eine zweite Öffnung für den Fliessweg ausgeformt. Diese zweite Öffnung hat eine zweite Öffnungsachse, die vorzugsweise der Öffnungsachse der ersten Öffnung entspricht. Auf der zweiten Wand befindet sich eine zweite Auflagefläche, die insbesondere die zweite Öffnung umschliesst und insbesondere der Dichtfläche parallel beabstandet gegenüberliegt.

Die zweite Auflagefläche und der zweite Tellerabschnitt sind zur Begrenzung der relativen linearen Beweglichkeit des zweiten Tellerabschnitts in Richtung zur zweiten Seite und zur zweiten Öffnung derart angeordnet und ausgebildet, dass in der Geschlossenstellung der zweite (innere) Tellerabschnitt bei auf der zweiten Seite der zweiten Öffnung herrschendem relativem Unterdruck in der ausgefahrenen Stellung mit einer Anschlagfläche in Richtung zur zweiten Seite auf der zweiten Auflagefläche aufliegt.

In anderen Worten sind der Abstand und die Lage der zweiten Auflagefläche auf der zweiten Wand und der Anschlagfläche auf dem zweiten Tellerabschnitt derart, dass sich der zweite Tellerabschnitt mit seiner Anschlagfläche in Richtung zur zweiten Seite auf der zweiten Auflagefläche abstützt, sobald in der Geschlossenstellung des Ventiltellers auf der zweiten Seite der zweiten Öffnung relativer Unterdruck herrscht. Diese Stellung, in welcher sich der zweite Tellerabschnitt beim Aufliegen auf der zweiten Auflagefläche befindet, ist die ausgefahrene Stellung des zweiten Tellerabschnitts.

Eine wesentliche Anforderung an ein Vakuumventil, welches in einem Herstellungsprozess für Halbleiter zum Einsatz kommt, ist die Vermeidung von Reibpartikeln. Abhängig vom Einsatzgebiet des Ventils kann es wesentlich sein, dass es beim Öffnen und Schliessen des Ventils zu keiner Metall- zu Metall-Berührung kommt. Daher sollte der zweite Tellerabschnitt, welcher in der ausgefahrenen Stellung auf der zweiten Auflagefläche aufliegt, vor in Querrichtung erfolgendem Verstellen des Ventiltellers von der Zwischenstellung in die Offenstellung wieder in die eingefahrene Stellung gebracht werden, damit ein reibender Kontakt des zweiten Tellerabschnitts auf der zweiten Auflagefläche der zweiten Wand beim Querverstellen des Ventiltellers zwischen der Zwischenstellung und der Offenstellung vermieden wird. Dies kann beispielsweise durch den Einsatz einer Feder erfolgen, welche zwischen dem zweiten und dem ersten Tellerabschnitt wirkt und den zweiten Tellerabschnitt im entlasteten Zustand in die eingefahrene Stellung hält. Eine derartige Federanordnung ist aus dem nächstliegenden Stand der Technik bekannt. Ein Nachteil einer solchen Federanordnung besteht darin, dass die Komplexität des Aufbaus des Ventiltellers weiter zunimmt und die Federn das Reinigen des Ventils erschweren. Weiters erhöht der Einsatz von Federn das Risiko einer Partikelgenerierung. Anstelle von Federn können erfindungsgemäss daher auch andere elastisch wirkende Elemente, welche zwischen dem zweiten und ersten Tellerabschnitt wirken und eine Kraft in Richtung zur eingefahrenen Stellung ausüben, eingesetzt werden.

Vorzugsweise wird jedoch auf den Einsatz von derartigen elastischen Elementen zwischen den Tellerabschnitten gänzlich verzichtet. Hierzu sieht die Erfindung insbesondere vor, dass vor Verstellen des Ventiltellers von der Geschlossenstellung in die Offenstellung ein relativer Unterdruck auf der ersten Seite der ersten Öffnung an das Ventil angelegt wird, so dass der zweite (innere) Tellerabschnitt von der gegebenenfalls eingenommenen ausgefahrenen Stellung oder einer dazwischen liegenden Stellung in die eingefahrene Stellung bewegt wird. Alternativ wird auf der zweiten Seite ein relativer Überdruck angelegt. Ist das Herstellen derartiger Druckverhältnisse vor dem Öffnen des Ventils jedoch nicht möglich, sieht die Erfindung alternativ vor, dass im Ventilgehäuse eine Führung vorgesehen ist, die derart im Ventilgehäuse angeordnet ist, dass beim in Querrichtung erfolgenden Schwenken des Ventiltellers von der Zwischenstellung in die Offenstellung der zweite Tellerabschnitt in die eingefahrene Stellung geführt wird.

In einer bevorzugten, vorteilhaften Weiterbildung der Erfindung wird der Antrieb zum Zurückstellen des zweiten Tellerabschnitts in die eingefahrene Stellung verwendet. Hierzu ist der mindestens eine Antrieb derart ausgebildet, dass der Ventilteller sowohl zwischen der Offenstellung und der Zwischenstellung mittels der Querbewegung schwenkbar oder verschiebbar ist, als auch zwischen der Zwischenstellung, der Geschlossenstellung und einer Initialisierungsstellung mittels der Längsbewegung verschiebbar ist. In der Initialisierungsstellung ist der Abstand des ersten Tellerabschnitts zur zweiten Wand derart reduziert, dass der zweite Tellerabschnitt mit seiner Anschlagfläche auf der zweiten Auflagefläche aufliegt und - insbesondere vollständig - in die eingefahrene Stellung geschoben ist. Die Zwischenstellung liegt zwischen der Geschlossenstellung und der Initialisierungsstellung, wobei die Initialisierungsstellung auf der zweiten Seite, also der Seite der zweiten Öffnung, und die Geschlossenstellung auf der ersten Seite, also der Seite der ersten Öffnung liegt.

Zur Automatisierung des kollisionslosen Schliess- und Öffnungsprozesses sieht die Erfindung vor, dass das Ventil eine Steuerung aufweist, die derart ausgebildet ist und mit dem Antrieb in derartiger Verbindung, insbesondere Steuerverbindung steht, dass der Ventilteller zum gasdichten Unterbrechen des Fliesswegs mittels der Querbewegung des Antriebs von der Offenstellung in die Zwischenstellung und mittels der Längsbewegung des Antriebs von der Zwischenstellung in die Geschlossenstellung verstellbar ist. Ausserdem ist die Steuerung derart ausgebildet und steht mit dem Antrieb in derartiger Verbindung, insbesondere Steuerverbindung, dass der Ventilteller zum vollständigen Öffnen des Fliesswegs mittels der Längsbewegung des Antriebs von der Geschlossenstellung in die Initialisierungsstellung und im Anschluss in der Zwischenstellung und mittels der Querbewegung des Antriebs von der Zwischenstellung in die Offenstellung verstellbar ist.

Vor dem Öffnen des Ventils kann sich der zweite Tellerabschnitt somit in einer beliebigen Stellung zwischen der eingefahrenen Stellung und der ausgefahrenen Stellung befinden, da durch das Verstellen des Ventiltellers von der Geschlossenstellung in die Initialisierungsstellung der zweite Tellerabschnitt - insbesondere vollständig - in die eingefahrene Stellung geschoben wird. Somit werden ein reibender Kontakt oder eine Kollision zwischen dem inneren Tellerabschnitt und dem Ventilgehäuse, insbesondere der zweiten Auflagefläche, und eine hierdurch bewirkte Partikelgenerierung vermieden. Bei der Steuerung kann es sich abhängig vom eingesetzten Antrieb um eine elektronische, elektrische, mechanische, pneumatische, hydraulische oder sonstige Steuerung handeln, wobei auch ein geeignetes Getriebe als Steuerung zu verstehen ist. Insbesondere handelt es sich bei der Steuerung um eine elektronische Steuerung, welche mit dem elektrischen Antrieb in entsprechender elektrischer Signalverbindung steht.

Gemäss einer spezifischen Weiterbildung der Erfindung ist die erste Dichtung auf der ersten Auflagefläche des ersten Tellerabschnitts zum Herstellen des axial dichtenden Kontakts mit der Dichtfläche des Ventilsitzes fixiert.

Die zweite Dichtung kann beispielsweise auf der Innenfläche des ersten Tellerabschnitts (bzw. dessen äusserer Begrenzung) zum Herstellen des radial dichtenden Kontakts mit der Aussenfläche des zweiten Tellerabschnitts oder auf der Aussenfläche des zweiten Tellerabschnitts zum Herstellen des radial dichtenden Kontakts mit der Innenfläche des ersten Tellerabschnitts fixiert sein.

In einer weiteren Ausführungsform der Erfindung ist der erste Tellerabschnitt mit dem mindestens einen Antrieb über einen derart seitlich an dem ersten Tellerabschnitt angeordneten, sich senkrecht zur Öffnungsachse erstreckenden Arm verbunden, dass sich der Arm in der Geschlossenstellung ausserhalb des entlang der Öffnungsachse geometrisch projizierten Öffnungsquerschnitts der ersten Öffnung befindet.

Ein solcher Arm kann insbesondere mittel eines Festlagers mit dem ersten Tellerabschnitt verbunden sein. Damit lassen sich relative Translationsbewegungen weitgehend unterbinden und das Ventil weist insbesondere bei einem Schliessen oder Öffnen des Ventils keine bewegten Teile an dieser Stelle auf. Bevorzugt werden zwei radial an dem ersten Tellerabschnitt gegenüberliegende Festlager vorgesehen.

Hinsichtlich der Ausgestaltung des Ventiltellers kann gemäss einer Ausführungsform der erste Tellerabschnitt ringförmig ausgebildet sein, der zweite Tellerabschnitt die Form einer geschlossenen Kreisscheibe aufweist und die Innenfläche und die Aussenfläche geometrische Kreiszylindermantelflächen sein. Die erste Auflagefläche und die Dichtfläche können als Ringflächen ausgeformt sein.

Das Vakuumventil ist insbesondere als ein Pendelventil ausgebildet und der Antrieb ist derart ausgebildet, dass der Ventilteller mittels der Querbewegung im Wesentlichen parallel über den Querschnitt der ersten Öffnung und senkrecht zur Öffnungsachse schwenkbar ist.

Das erfindungsgemässe Ventilsystem wird nachfolgend anhand von in den Zeichnungen schematisch dargestellten konkreten Ausführungsbeispielen rein beispielhaft näher beschrieben, wobei auch auf weitere Vorteile der Erfindung eingegangen wird. Im Einzelnen zeigen:
- Figur 1a: eine seitliche Querschnittsansicht auf ein erfindungsgemässes Ventil in der Zwischenstellung mit dem inneren Tellerabschnitt in eingefahrener Stellung;
- Figur 1b: eine seitliche Querschnittsansicht auf ein erfindungsgemässes Ventil in der Geschlossenstellung mit dem inneren Tellerabschnitt in eingefahrener Stellung;
- Figur 1c: eine seitliche Querschnittsansicht auf ein erfindungsgemässes Ventil in der Geschlossenstellung mit dem inneren Tellerabschnitt in ausgefahrener Stellung;
- Figur 1d: eine seitliche Querschnittsansicht auf ein erfindungsgemässes Ventil in der Initialisierungsstellung mit dem inneren Tellerabschnitt in eingefahrener Stellung;
- Figur 2a: eine Detailansicht aus Figur 1a;
- Figur 2b: eine Detailansicht aus Figur 1b;
- Figur 2c: eine Detailansicht aus Figur 1c;
- Figur 2d: eine Detailansicht aus Figur 1d;
- Figur 3: einen Schnitt durch ein erfindungsgemässes Pendelventil parallel zum Ventilsitz; und
- Figur 4: eine seitliche Querschnittsansicht auf ein erfindungsgemässes Ventil in der Offenstellung.

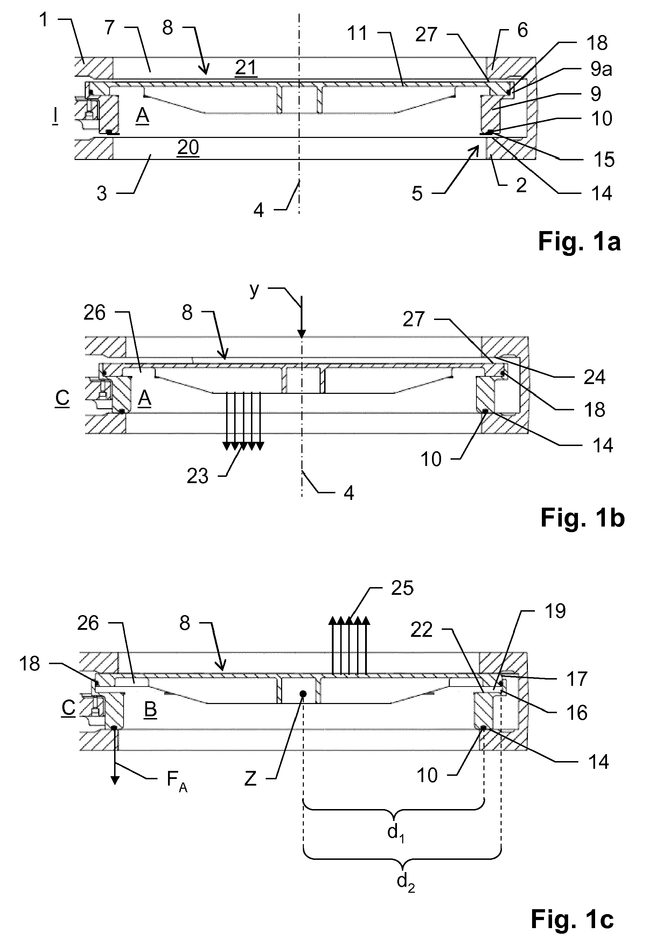

Die Figuren 1a bis 4 zeigen eine gemeinsame, exemplarische Ausführungsform eines erfindungsgemässen Ventils in unterschiedlichen Zuständen, aus unterschiedlichen Ansichten und in unterschiedlichen Detaillierungsgraden. Daher werden diese Figuren gemeinsam beschrieben, wobei zum Teil auf bereits in vorangegangenen Figuren erläuterte Bezugszeichen und Merkmale nicht erneut eingegangen wird.

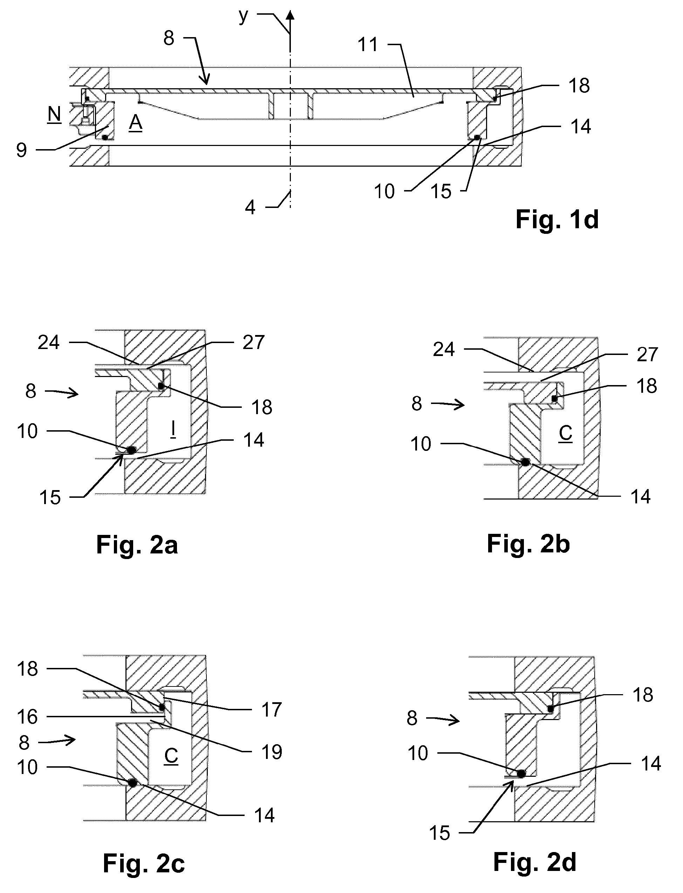

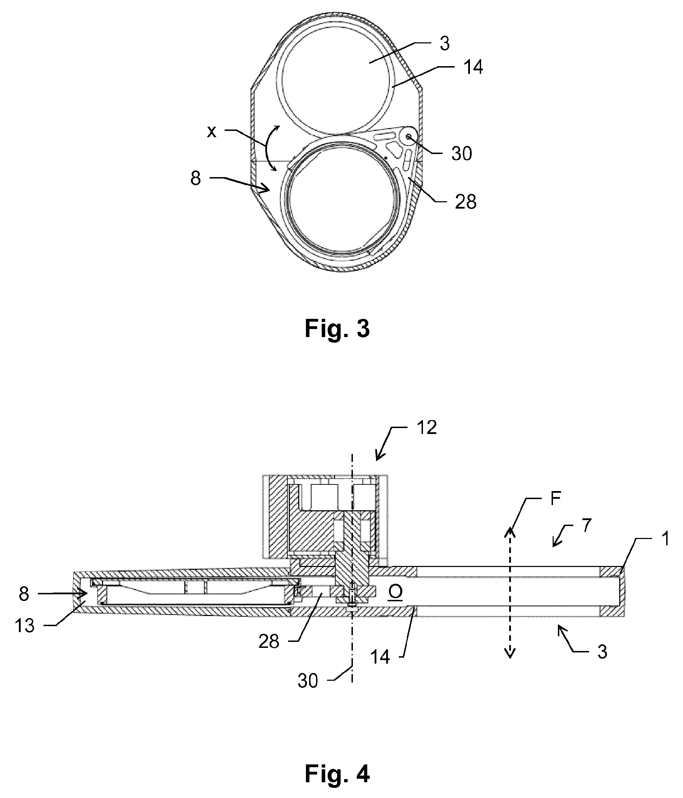

In den Figuren 1a bis 4 ist eine mögliche Ausführungsform des erfindungsgemässen Ventils in Form eines Pendelventils dargestellt. Das Ventil zum im Wesentlichen gasdichten Unterbrechen eines Fliesswegs F, der in Figur 4 anhand von Pfeilen symbolisiert ist, besitzt ein Ventilgehäuse 1, welcher eine erste Öffnung 3 und eine gegenüberliegende zweite Öffnung 7 aufweist. Beide Öffnungen 3 und 7 haben einen kreisrunden Querschnitt, auch andere Formen sind jedoch möglich. In der Geschlossenstellung C eines Ventiltellers 8, Figuren 1b, 1c, 2b und 2c, sind die beiden Öffnungen 3 und 7 mittels des Ventiltellers 8 gasdicht voneinander getrennt, während die beiden Öffnungen 3 und 7 in der Offenstellung O (Figuren 3 und 4) des Ventiltellers 8 miteinander verbunden sind.

Das Ventilgehäuse 1 setzt sich insbesondere aus einer ersten Wand 2, in welcher die erste Öffnung 3 ausgeformt ist, und einer parallel zur ersten Wand 2 liegenden zweiten Wand 6, in welcher die zweite Öffnung 7 ausgeformt ist, zusammen. Die erste Wand 2 befindet sich auf einer ersten Seite 20 des Ventilgehäuses 1 und die zweite Wand 6 auf einer zweiten Seite 21 des Ventilgehäuses 1. Die zweite Wand 6 hat in beabstandeter, im Wesentlichen paralleler Gegenüberlage zur ersten Wand 2 und zur ersten Öffnung 3 die zweite Öffnung 7 für den Fliessweg F, wie in den Figuren 1a bis 2d und 4 gezeigt.

Beide Öffnungen 3 und 7 haben eine gemeinsame geometrische geradlinige Öffnungsachse 4, welche durch die geometrischen Mittelpunkte der kreisförmigen Öffnungen 3 und 7 verläuft, wie in den Figuren 1a bis 2d und 4 gezeigt.

Die erste Öffnung 3 wird von einem Ventilsitz 5 umschlossen. Dieser Ventilsitz 5 wird von einer axial in Richtung des Ventiltellers 8 weisenden und quer zur Öffnungsachse 4 verlaufenden, die Form eines Kreisrings aufweisenden Dichtfläche 14, welche im Ventilgehäuse 1 ausgeformt ist, gebildet.

Ausserdem besitzt das Ventil einen Ventilteller 8 mit einem ringförmigen ersten Tellerabschnitt 9 und einem geschlossenen, kreisscheibenförmigen zweiten Tellerabschnitt 11, wie in den Figuren 1a bis 2d und 4 gezeigt.

Der erste (äussere) Tellerabschnitt 9 hat eine axial in Richtung des Ventilsitzes 5 weisende und quer zur Öffnungsachse 4 verlaufende erste Auflagefläche 15, welche die Form eines Kreisringes aufweist. Diese erste Auflagefläche 15 hat eine mit der Dichtfläche 14 des Ventilsitzes 5 korrespondierende Form und ist somit derart angeordnet und ausgebildet, dass in einer Geschlossenstellung C des ersten Tellerabschnitts 9 des Ventiltellers 8 mittels einer ersten Dichtung 10 ein axial dichtender Kontakt mit der Dichtfläche 14 besteht. Die erste Dichtung 10 ist in Form eines O-Rings mit einem kreisförmigen Querschnitt auf der ersten Auflagefläche 15 des ersten Tellerabschnitts 9 zum Herstellen des axial dichtenden Kontakts mit der Dichtfläche 14 des Ventilsitzes 5 in einer Nut, die den ersten Tellerabschnitts 9 umläuft, fixiert, wie gezeigt.

Der erste Tellerabschnitt 9 weist zudem eine strukturelle äussere Begrenzung 9a auf, welche ein Lagerung des zweiten Tellerabschnitts 11 innerhalb dieser Begrenzung 9a ermöglicht, wobei eine axiale Beweglichkeit des zweiten Tellerabschnitts 11, insbesondere parallel zur Öffnungsachse 4, bereitgestellt ist.

Diese äussere Begrenzung 9a weist eine Innenfläche 16 (Figuren 1c und 2c) auf, welche hier die Form einer geometrischen Kreiszylindermantelfläche hat.

Der zweite Tellerabschnitt 11 ist innerhalb der äusseren Begrenzung 9a des ersten Tellerabschnitts 9 in Richtung parallel zur Öffnungsachse 4 relativ zum ersten Tellerabschnitt 9 zwischen einer eingefahrenen Stellung A und einer ausgefahrenen Stellung B linear bewegbar auf dichte Weise gelagert. Hierzu weist die ringförmige äussere Begrenzung 9a die radial nach innen weisende und parallel zur Öffnungsachse 4 verlaufende Innenfläche 16 auf. Die Innenfläche 16 und die erste Auflagefläche 15 des äusseren Tellerabschnitts 9 verlaufen insbesondere konzentrisch zueinander. Der zweite Tellerabschnitt 11 hat eine radial nach aussen weisende und parallel zur Öffnungsachse 4 verlaufende, mit der Innenfläche 16 korrespondierende Aussenfläche 17, welche ebenfalls die Form einer geometrischen Kreiszylindermantelfläche hat. Zwischen dieser Aussenfläche 17 und der Innenfläche 16 besteht über eine dazwischen liegende zweite Dichtung 18 ein radial dichtender Kontakt in dem Bereich zwischen der eingefahrenen Stellung A und der ausgefahrenen Stellung B (Kontaktbereich). Diese zweite Dichtung 18 ist als O-Ring mit kreisförmigem Querschnitt ausgebildet. In dem gezeigten Ausführungsbeispiel ist die zweite Dichtung 18 in einer Nut auf der Aussenfläche 17 des zweiten Tellerabschnitts 11 zum Herstellen des radial dichtenden Kontakts mit der Innenfläche 16 des ersten Tellerabschnitts 9 fixiert.

Der erste Tellerabschnitt 9 ist über einen seitlich an dem ersten Tellerabschnitt 9 angeordneten, sich senkrecht zur Öffnungsachse 4 erstreckenden Arm 28 mit einem elektrischen Antrieb 12 (Motor) verbunden. Dieser Arm 28 befindet sich in der Geschlossenstellung C des Ventiltellers 8 ausserhalb des entlang der Öffnungsachse 4 geometrisch projizierten Öffnungsquerschnitts der ersten Öffnung 3, wie in Figuren 1a, 1b, 3 und 4 erkennbar.

Ein elektrischer Antrieb 12 ist durch Einsatz eines entsprechenden Getriebes derart ausgebildet, dass der Ventilteller 8 - wie bei einem Pendelventil üblich - mittels der Querbewegung x des Antriebs 12 quer zur Öffnungsachse 4 und im Wesentlichen parallel über den Querschnitt der ersten Öffnung 3 und senkrecht zur Öffnungsachse 4 in Form einer Schwenkbewegung um die Schwenkachse 30 zwischen einer Offenstellung O und einer Zwischenstellung I, wie in der Figur 3 gezeigt, schwenkbar und mittels einer parallel zur Öffnungsachse 4 erfolgenden Längsbewegung y des Antriebs 12 linear verschiebbar ist, wie in den Figuren 1a bis 2d gezeigt. In der Offenstellung O, ist der Ventilteller 8 in einem seitlich neben der ersten Öffnung 3 angeordneten Verweilabschnitt 13 positioniert, so dass die erste Öffnung 3 und der Fliessweg F freigegeben sind (Figur 4). In der Zwischenstellung I, Figuren 1a und 2a, ist der Ventilteller 8 über der ersten Öffnung 3 positioniert und überdeckt den Öffnungsquerschnitt der ersten Öffnung 3. In der Geschlossenstellung C, Figuren 1b, 1c, 2b und 2c, ist erste Öffnung 3 gasdicht geschlossen und der Fliessweg F unterbrochen, indem ein gasdichter Kontakt zwischen der ersten Auflagefläche 15 des ersten Tellerabschnitt 9 und der Dichtfläche 14 des Ventilsitz 5 besteht.

Aufgrund der Zweiteilung des Ventiltellers 8 in einen mit dem Antrieb 12 über den Arm 28 gekoppelten und mit dem Ventilsitz 5 in gasdichten Kontakt bringbaren ersten Tellerabschnitt 9 und einen relativ zum ersten Tellerabschnitt 9 in Richtung parallel zur Öffnungsachse 4 im Wesentlichen frei bewegbaren zweiten Tellerabschnitt 11 wirkt in der Geschlossenstellung C eine Druckdifferenz am Ventilteller 8 im Wesentlichen auf den bewegbaren zweiten Tellerabschnitt 11. Der zweite Tellerabschnitt 11 ist in Richtung parallel zur Öffnungsachse 4 im Wesentlichen entkoppelt von dem ersten Tellerabschnitt 9 und stützt sich direkt oder indirekt auf das Ventilgehäuse 1 ab.

Auf der ersten Wand 1 ist die die erste Öffnung 3 umschliessende Dichtfläche 14 im Ventilgehäuse 1 ausgeformt. Diese Dichtfläche 14 wird von einem im Wesentlichen senkrechten bzw. radial zur Öffnungsachse 4 verlaufenden Absatz in der ersten Öffnung 3 gebildet. Dieser Absatz 14 ist ringartig um die erste Öffnung 3 herum angeordnet und erstreckt sich im Wesentliche entlang einer geometrischen Ebene, zu welcher die Öffnungsachse 4 eine geometrische Normale ist. Dieser Absatz stellt somit die in Richtung zum ersten Tellerabschnitt 9 weisende Dichtfläche 14 für die erste Auflagefläche 15 des ersten Tellerabschnitts 9 dar. Die Dichtfläche 14 und der erste Tellerabschnitt 9 sind somit derart angeordnet und ausgebildet, dass in der Geschlossenstellung C der erste Tellerabschnitt 9 mit der ersten Auflagefläche 15 in Richtung zur ersten Seite 20 auf der Dichtfläche 14 aufliegt, wie in den Figuren 1b, 1c, 2b und 2c gezeigt. Die Dichtfläche 14 der ersten Wand 2 bildet somit eine Wegbegrenzung für den ersten Tellerabschnitt 9 beim linearen Verstellen dieses äusseren Tellerabschnitts 9 entlang der Öffnungsachse 4 von der Zwischenstellung I, Figuren 1a und 2a, in die Geschlossenstellung C, Figuren 1b und 2b, und definiert somit die Geschlossenstellung C des ersten Tellerabschnitts 9.

In der Ausgangsstellung befindet sich der zweite Tellerabschnitt 11 in eingefahrener Stellung A im ersten Tellerabschnitt 9, wie in den Figuren 1a, 1b, 2a und 2b gezeigt. Zur Begrenzung der relativen linearen Beweglichkeit des zweiten (inneren) Tellerabschnitts 11 in Richtung zur ersten Seite 20 und zur ersten Öffnung 3 dient eine mit dem ersten Tellerabschnitt ausgeformte Stützfläche 22 (Figur 1c), auf welcher der zweite Tellerabschnitt 11, insbesondere bei einem relativen Überdruck auf Seiten der zweiten Öffnung 7, aufliegen kann. Dies bewirkt entsprechend, dass der zweite Tellerabschnitt 11 in der Geschlossenstellung C des ersten Tellerabschnitts 9 bei auf der ersten Seite 20 der ersten Öffnung 3 herrschendem relativem Unterdruck 23 in der eingefahrenen Stellung A auf dem ersten Tellerabschnitt 9 aufliegt, wie in den Figuren 1b und 2b gezeigt. Somit definiert die Stützfläche 22 die eingefahrene Stellung A, wie in den Figuren 1b und 2b gezeigt. Herrscht in der Geschlossenstellung C, in welcher der erste Tellerabschnitt 9 mit seiner ersten Auflagefläche 15 auf der Dichtfläche 14 aufliegt, wie in Figur 1b und 2b gezeigt, ein relativer Unterdruck auf der ersten Seite 20 der ersten Öffnung 3, worunter auch ein relativer Überdruck auf der zweiten Seite 21 der zweiten Öffnung 7 zu verstehen ist, so wird der zweite Tellerabschnitt 11 in Richtung zur ersten Seite 20 und zur ersten Öffnung 3 gedrückt. Der zweite Tellerabschnitt 11 liegt in der eingefahrenen Stellung A auf dem ersten Tellerabschnitt 9 auf, indem sich der zweite Tellerabschnitt 11 auf der Stützfläche 22 des ersten Tellerabschnitts 9 abstützt. Somit stützt sich der zweite Tellerabschnitt 11 indirekt, nämlich über den ersten Tellerabschnitt 9, auf der Dichtfläche 14 der ersten Wand 2 des Ventilgehäuses 5 ab, wie in den Figuren 1b und 2b gezeigt. Durch dieses Abstützen des gesamten Ventiltellers 8 auf dem Ventilgehäuse 1 wird der Arm 28 des Antriebs 12 sowie der Antrieb 12 selbst von dem herrschenden Unterdruck 23 nicht belastete, da im Wesentlichen der gesamte Differenzdruck auf das Ventilgehäuse 1 wirkt.

Kommt es in der Geschlossenstellung C zu einer Umkehr des Differenzdrucks, so dass auf der zweiten Seite 21 der zweiten Öffnung 7 ein relativer Unterdruck 25 herrscht, worunter auch ein relativer Überdruck auf der ersten Seite 20 der ersten Öffnung 3 zu verstehen ist, wirkt auf den Ventilteller 8 eine Kraft in Richtung zur zweiten Öffnung 7 und zur zweiten Seite 21. Somit wird der bewegliche zweite (innere) Tellerabschnitt 11 aus seiner eingefahrenen Stellung A in die ausgefahrenen Stellung B in Richtung zur zweiten Seite 21 bewegt. Um auch in dieser Situation ein Abstützen des zweiten Tellerabschnitts 11 auf das Ventilgehäuse 1 zu bewirken, ist auf der zweiten Wand 6 eine die zweite Öffnung 7 rings umschliessende zweite Auflagefläche 24 ausgeformt, welche als Auflagefläche für den zweiten Tellerabschnitt 11 dient. Diese zweite Auflagefläche 24 erstreckt sich senkrecht bzw. radial zur Öffnungsachse 4 und verläuft entlang einer geometrischen Ebene, zu welcher die Öffnungsachse 4 eine Normale bildet.

Der zweite Tellerabschnitt 11 und die zweite Auflagefläche 24 haben derart korrespondierende Dimensionen und sind derart angeordnet und ausgebildet, dass eine zur zweiten Seite 21 weisende Anschlagfläche 27 des zweiten Tellerabschnitts 11 auf der zweite Auflagefläche 24 zum Liegen kommen kann. Diese Anordnung dient somit zur Begrenzung der relativen linearen Beweglichkeit des zweiten Tellerabschnitts 11 in Richtung zur zweiten Seite 21 und zur zweiten Öffnung 7. Befindet sich der erste Tellerabschnitt 9 in der Geschlossenstellung C und herrscht auf der zweiten Seite 21 der zweiten Öffnung 7 relativer Unterdruck 25, wie in den Figur 1c und 2c gezeigt, so fährt der innere Tellerabschnitt 11 in der ausgefahrenen Stellung B und liegt mit besagter Anschlagfläche 27 in Richtung zur zweiten Seite 21 auf der zweiten Auflagefläche 24 auf. Somit stützt sich der zweite Tellerabschnitt 11 direkt auf der zweiten Auflagefläche 24 der zweiten Wand 7 des Ventilgehäuses 1 auf, so dass auch bei diesen Druckverhältnissen sowohl der Antrieb 12 als auch der Arm 28 des Antriebs 12 von Kräften am Ventilteller 8, welche aufgrund des Unterdrucks 25 auf der zweiten Seite 21 herrschen, im Wesentlichen befreit sind.

In einer Positionierung des zweiten Tellerabschnitts 11 in der ausgefahrenen Stellung B bzw. bereits bei einem Verlassen der eingefahrenen Stellung A ist bzw. wird zwischen dem ersten Tellerabschnitt 9 und dem zweiten Tellerabschnitt 11 ein Zwischenbereich 19 (Figuren 1c und 2c) freigegeben, welcher zumindest durch die Stützfläche 22 des ersten Tellerabschnitts 9 und die in Gegenüberlage vorliegende Unterseite des zweiten Tellerabschnitts sowie insbesondere durch die Innenfläche 16 der Begrenzung 9a definiert und begrenzt ist.

Dieser Zwischenbereich 19 bewirkt bei Anliegen eines relativen Überdrucks auf der ersten Seite 20 des Ventils 1, dass dieser Überdruck nicht allein auf den zweiten Tellerabschnitt 11 wirkt und zu einer Abstützung dieses Abschnitts 11 an der zweiten Wand 6 führt, sondern dass zudem einen Druck auf den ersten Tellerabschnitt 9 axial in Richtung der ersten Seite 20 erzeugt wird. Es entsteht ein dem Überdruck entsprechender Druck auf die Stützfläche 22. Dadurch entsteht eine axiale Kraft F_{A} in Richtung der ersten Seite 20, wodurch wiederum eine Anpressung des ersten Tellerabschnitts 9 auf den Ventilsitz 5 verursacht wird. Damit wird mit der vorliegenden Erfindung nicht nur ein axiales Abstützen des Ventiltellers 8 bei Vorliegen eines Differenzdrucks erreicht, sondern zudem eine Verstärkung der Abdichtwirkung bei Anliegen eines solchen Differenzdrucks, unabhängig davon ob ein Über- oder Unterdruck vorliegt.

Da die Stützfläche 22 hierbei die grösste Fläche des ersten Tellerabschnitts 11 darstellt, welche eine aus einem Druck resultierende Kraftkomponente F_{A} in axialer Richtung bereitstellt, und diese Stützfläche 22 insbesondere senkrecht zur Öffnungsachse steht, ist die Kraft, die aufgrund eines Überdrucks auf der ersten Seite 20 in axialer Richtung auf den ersten Tellerabschnitt 9 erzeugt wird, stets in Richtung der ersten Seite am grössten und führt zu einem Anpressen des ersten Tellerabschnitts 9 an den Ventilsitz 5, während der zweite Tellerabschnitt 11 an der ersten Wand 6 abgestützt ist.

Die Erfindung beruht auf der strukturellen Ausgestaltung der beiden Tellerabschnitte 9 und 11 zueinender und der relativen Anordnung der beiden vorgesehenen Dichtungen 10 und 18. Die zweite Dichtung 18 weist in der beschriebenen Ausführungsform einen grösseren Durchmesser auf als die erste Dichtung 10, d.h. die jeweils zugeordneten Flächen des ersten Tellerabschnitts 9 (erste Auflagefläche und Innenfläche) weisen entsprechend unterschiedliche Durchmesser bzw. Abstände zu einem Mittelpunkt Z des Ventiltellers (in Geschlossenstellung auch zu einem Mittelpunkt der ersten Öffnung) auf. Die radiale Abdichtung liegt zumindest teilweise radial weiter von solchen Zentrum Z entfernt als die axiale Abdichtung (Abstände d₁ und d₂ in Figur 1c).

Durch diesen vergrösserten Durchmesser der radialen Abdichtung zwischen dem ersten Tellerabschnitt 9 und dem zweiten Tellerabschnitt 11 im Vergleich zur axialen Abdichtung zwischen erstem Tellerabschnitt 9 und dem Ventilgehäuse können die Tellerabschnitte 9 und 11 so ausgeformt und angeordnet werden, dass sich eine erwähnte Stützfläche 22 ergibt und die verbesserte Dichtwirkung auch bei relativem Überdruck auf der ersten Seite 20 resultiert. Gleichzeitig stellt der Ventilteller eine axiale Abstützung in beide axialen Richtungen in Abhängigkeit des vorherrschenden Drucks bereit.

Ferner weist der zweite Tellerabschnitt 11 eine Ausnehmung 26 auf, welche eine Verbindung der Stützfläche 22 mit einem an der ersten Seite 20 vorliegenden Volumen auch in der eingefahrenen Stellung A bereitstellt. Dadurch wird bereits in dieser Stellung A eine Art Kanal zwischen den Abschnitten ausgebildet und ein entstehender Überdruck auf dieser Seite 20 wirkt unmittelbar auch axial auf den ersten Tellerabschnitt 9. hierdurch ist insbesondere die Gefahr eines Verlustes der Dichtwirkung bei starken Druckschwankungen reduziert bzw. verhindert.

Herrscht in der Geschlossenstellung C relativer Unterdruck auf der zweiten Seite 21 der zweiten Öffnung 7 und befindet sich der zweite Tellerabschnitt 11 in der ausgefahrenen Stellung B, wie in den Figuren 1c und 2c gezeigt, muss der zweite Tellerabschnitt 11 vor dem Schwenken des Ventiltellers 8 von der Zwischenstellung I (Figur 1a) in die Offenstellung O (Figur 4) wieder in die eingefahrene Stellung A gebracht werden, um einen reibenden und Reibpartikel erzeugenden Kontakt zwischen dem inneren Tellerabschnitt 11 und der zweiten Wand 6 beim Durchführen der Querbewegung x (Figur 3) zu verhindern. Hierfür sieht die Erfindung in diesem Ausführungsbeispiel vor, dass der Antrieb 12, insbesondere das Getriebe des Antriebs 12, derart ausgebildet ist, dass der Ventilteller 8 zwischen der Offenstellung O und der Zwischenstellung I mittels der Querbewegung x um die Schwenkachse 30 schwenkbar, sowie zwischen der Zwischenstellung I der Geschlossenstellung C (Figuren 1b, 1c, 2b und 2c) und einer Initialisierungsstellung N (Figuren 1d und 2d) mittels der Längsbewegung y entlang der Öffnungsachse 4 linear verschiebbar ist. Die Zwischenstellung I liegt zwischen der Geschlossenstellung C und der Initialisierungsstellung N.

In der Initialisierungsstellung N ist der Abstand des äusseren Tellerabschnitts 9 zur zweiten Wand 6 derart reduziert, dass der zweite Tellerabschnitt 11 auf der zweiten Auflagefläche 24 aufliegt und vollständig in die eingefahrene Stellung A geschoben ist. Ausgehend von dieser Initialisierungsstellung N kann der Ventilteller 8 mit dem zweiten Tellerabschnitt 11 in eingefahrener Stellung A zum vollständigen Öffnen des Ventils mittels des Antriebs 12 linear in die Zwischenstellung I verstellt und von dort mittels der schwenkenden Querbewegung x in die Offenstellung O geschwenkt werden, ohne dass es zu einer Kollision zwischen dem zweiten Tellerabschnitt 11 und dem Ventilgehäuse 1 kommt.

Um ein automatisiertes Öffnen und Schliessen des Ventils zu ermöglichen, sieht das Ventil eine elektronische Steuerung vor, die derart ausgebildet ist und mit dem Antrieb 12 und dem Getriebe in derartiger Verbindung steht, dass der Ventilteller 8 zum gasdichten Unterbrechen des Fliesswegs F und zum vollständigen Öffnen des Fliesswegs F entsprechend verstellbar ist. Zum gasdichten Unterbrechen des Fliesswegs F ist der Ventilteller 8 durch die Steuerung mittels der Querbewegung x des Antriebs 12 von der Offenstellung O in die Zwischenstellung I und mittels der Längsbewegung y des Antriebs 12 von der Zwischenstellung I in die Geschlossenstellung C verstellbar. Zum vollständigen Öffnen des Fliesswegs F ist der Ventilteller 8 durch die Steuerung 29 mittels der Längsbewegung y des Antriebs 12 von der Geschlossenstellung C, in welcher sich der zweite Tellerabschnitt 11 in einer beliebeigen Stellung zwischen der eingefahrenen Stellung A und der ausgefahrenen Stellung B über die Initialisierungsstellung N zum vollständigen Schieben des inneren Tellerabschnitts 11 in die eingefahrene Stellung B in der Zwischenstellung I und von dort aus mittels der Querbewegung x des Antriebs 12 von der Zwischenstellung I in die Offenstellung O verstellbar.

Alternativ besteht die Möglichkeit, dass auch beim Schliessen des Ventils die Initialisierungsstellung I angefahren wird. Insbesondere im Falle einer nichtelektronischen Steuerung kann dies zur Vereinfachung des Aufbaus der Steuerung von Vorteil sein. In diesem Fall entspricht die Bewegungssequenz des Ventiltellers 8 beim Schliessen derjenigen beim Öffnen.

Im vorliegenden Ausführungsbeispiel ist der Antrieb 12 als ein Elektromotor ausgebildet, wobei das Getriebe derart umschaltbar ist, dass ein Antreiben des Antriebs 12 entweder die Querbewegung x oder die Längsbewegung y bewirkt. Der Antrieb 12 und das Getriebe werden von der Steuerung elektronisch angesteuert. Somit ist es möglich, durch ein der Steuerung zugeführtes Eingangssignal, das die Verstellrichtung, also Öffnen oder Schliessen, vorgibt, die Bewegungssequenz des Ventiltellers 8 automatisch ausführen zu lassen. Alternativ besteht die Möglichkeit, dass die Steuerung von dem Getriebe gebildet wird, wobei - insbesondere abhängig von der Verstellrichtung des Antriebs 12 - die einzelnen Stellungen angefahren werden. Derartige Getriebe, insbesondere mit Kulissenschaltungen, sind aus dem Stand der Technik bekannt. Weiters ist es möglich, mehrere Antriebe zum Bewirken der Querbewegung x und der Längsbewegung y einzusetzen, wobei die Steuerung die Ansteuerung der Antriebe übernimmt.

Das beschriebene Pendelventil eignet sich insbesondere für den Einsatz als Regelventil, wobei das präzise Regeln des Durchflusses nicht nur durch schwenkendes Verstellen des Ventiltellers 8 zwischen der Offenstellung O und der Zwischenstellung I mittels der Querbewegung x, sondern vor allem durch lineares Verstellen des Ventiltellers 8 entlang der Öffnungsachse 4 zwischen der Zwischenstellung I, der Geschlossenstellung C und der Initialisierungsstellung N mittels der Längsbewegung y möglich ist. Somit kann das beschriebene Pendelventil auch für präzise Regelaufgaben eingesetzt werden. Im Falle eines molekularen anstelle eines laminaren Flusses sind die auf dem Ventilteller 8 im Regelbetrieb angreifenden Kräfte derart gering, dass der zweite Tellerabschnitt 11 von der zweiten Dichtung 18 festgehalten werden kann und sich nicht verstellt. Aufgrund einer Dämpfung des Ventiltellers 8 insbesondere durch die elastischen Dichtungen 10 und 18 kann ein Vibrieren oder Flattern der inneren Tellerabschnitts 11 vermieden werden.

Es versteht sich, dass die dargestellten Figuren nur mögliche Ausführungsbeispiele schematisch darstellen. Die verschiedenen Ansätze können erfindungsgemäss ebenso miteinander sowie mit Verfahren und Vorrichtungen zum Verschliessen von Volumina unter Vakuumbedingungen des Stands der Technik kombiniert werden.

## Patentansprüche

1. Vakuumventil zum im Wesentlichen gasdichten Unterbrechen eines Fliesswegs (F), mit
• einem Ventilgehäuse (1) mit einer ersten Wand (2), die eine erste Öffnung (3) für den Fliessweg (F) mit einer geometrischen Öffnungsachse (4) und einen die erste Öffnung (3) umschliessenden Ventilsitz (5) auf einer ersten Seite (20) des Ventilgehäuses (1) aufweist,
• einem Ventilteller (8) mit
- einem insbesondere ring- oder rahmenartigen ersten Tellerabschnitt (9) mit einer äusseren Begrenzung (9a) und
- einem geschlossenen zweiten Tellerabschnitt (11), der innerhalb der äusseren Begrenzung (9a) in Richtung parallel zur Öffnungsachse (3) relativ zum ersten Tellerabschnitt (9) zwischen einer eingefahrenen Stellung (A) und einer ausgefahrenen Stellung (B) linear bewegbar auf dichte Weise gelagert ist,
• mindestens einem Antrieb (12), der mit dem ersten Tellerabschnitt (9) verbunden ist und der derart ausgebildet ist, dass der Ventilteller (8) zwischen
- einer Offenstellung (0), in welcher der Ventilteller (8) in einem seitlich neben der ersten Öffnung (3) angeordneten Verweilabschnitt (13) positioniert ist und die erste Öffnung (3) und den Fliessweg (F) freigibt, und
- einer Zwischenstellung (I), in welcher der Ventilteller (8) über der ersten Öffnung (3) positioniert ist und den Öffnungsquerschnitt der ersten Öffnung (3) überdeckt,
mittels einer im Wesentlichen quer zur Öffnungsachse (4) erfolgenden Querbewegung (x) schwenkbar oder verschiebbar ist und
zwischen
- der Zwischenstellung (I) und
- einer Geschlossenstellung (C), in welcher ein die erste Öffnung (3) gasdicht schliessender und den Fliessweg (F) unterbrechender gasdichter Kontakt zwischen dem ersten Tellerabschnitt (9) und dem Ventilsitz (5) besteht,
mittels einer parallel zur Öffnungsachse (4) erfolgenden Längsbewegung (y) verschiebbar ist,
wobei in der Geschlossenstellung (C) eine Druckdifferenz am Ventilteller (8) im Wesentlichen auf den bewegbaren zweiten Tellerabschnitt (11) wirkt und sich der zweite Tellerabschnitt (11) in Richtung parallel zur Öffnungsachse (4) im Wesentlichen entkoppelt von dem ersten Tellerabschnitt (9) direkt oder indirekt auf das Ventilgehäuse (1) abstützt,
**dadurch gekennzeichnet, dass**
• der Ventilsitz (5) eine axial in Richtung des Ventiltellers weisende und quer zur Öffnungsachse (4) verlaufende Dichtfläche (14) aufweist,
• der erste Tellerabschnitt (9) eine axial in Richtung des Ventilsitzes (5) weisende und quer zur Öffnungsachse (4) verlaufende erste Auflagefläche (15) aufweist, die derart angeordnet und ausgebildet ist, dass in der Geschlossenstellung (C) über eine dazwischen liegende erste Dichtung (10) in einem ersten Kontaktbereich ein axial dichtender Kontakt mit der Dichtfläche (14) besteht,
• die äussere Begrenzung (9a) eine radial nach innen weisende und parallel zur Öffnungsachse (4) verlaufende Innenfläche (16) aufweist,
• der zweite Tellerabschnitt (11) eine radial nach aussen weisende und parallel zur Öffnungsachse (4) verlaufende Aussenfläche (17) aufweist, die derart angeordnet und ausgebildet ist, dass über eine dazwischen liegende zweite Dichtung (18) ein radial dichtender Kontakt mit der Innenfläche (16) über einen zweiten Kontaktbereich zwischen der eingefahrenen Stellung (A) und der ausgefahrenen Stellung (B) besteht, und
• zumindest für bestimmte radiale Winkel um ein Zentrum (Z) des Ventiltellers (8), insbesondere umlaufend, ein erster radialer Abstand (d1) von dem Zentrum (Z) bis zur ersten Auflagefläche (15) kleiner ist als ein zweiter radialer Abstand (d2) von dem Zentrum (Z) bis zum zweiten Kontaktbereich.

2. Ventil nach Anspruch 1,
**dadurch gekennzeichnet, dass**
der erste Tellerabschnitt (9) eine
• axial in eine Richtung zum zweiten Tellerabschnitt (11) weisende und quer zur Öffnungsachse (4) verlaufende sowie
• zu der äusseren Begrenzung benachbarte Stützfläche (22) aufweist,
wobei die Stützfläche (22) und der zweite Tellerabschnitt (11) derart angeordnet sind, dass in der Geschlossenstellung (C) der zweite Tellerabschnitt (11) bei auf der ersten Seite (20) der ersten Öffnung (3) herrschendem relativem Unterdruck (23) in der eingefahrenen Stellung (A) auf der Stützfläche (22) aufliegt.

3. Ventil nach Anspruch 2,
**dadurch gekennzeichnet, dass**
zumindest die Stützfläche (22) und die der Stützfläche (22) gegenüberliegende Unterseite des zweiten Tellerabschnitts (11), und insbesondere die Innenfläche (16), Begrenzungsflächen für einen Zwischenbereich (19) definieren, dessen Volumen
• in Abhängigkeit der Stellung des zweiten Tellerabschnitts (11) bestimmt ist, wobei das Volumen in eingefahrener Stellung (A) minimal, insbesondere Null, ist und das Volumen in ausgefahrenen Stellung (B) maximal ist, und
• in Geschlossenstellung (C) mit der ersten Öffnung (3) verbunden ist.

4. Ventil nach Anspruch 2 oder 3,
**dadurch gekennzeichnet, dass**
die Stützfläche (22) in radialer Richtung zwischen der ersten Dichtung (10) und der zweiten Dichtung (18) ausgeformt ist.

5. Ventil nach einem der Ansprüche 2 bis 4,
**dadurch gekennzeichnet, dass**
die Stützfläche (22) und die äussere Begrenzung relativ zueinander rechtwinklig angeordnet sind.

6. Ventil nach einem der Ansprüche 1 bis 5,
**dadurch gekennzeichnet, dass**
der zweite Tellerabschnitt (11) an seiner axial zum Ventilsitz (5) weisenden Unterseite eine Ausnehmung (26) aufweist, wobei die Ausnehmung (26) sich radial derart erstreckend ausgestaltet ist, dass diese in radialer Richtung zumindest teilweise mit sowohl der Stützfläche (22) als auch in Geschlossenstellung (C) mit dem Öffnungsquerschnitt der ersten Öffnung (3) überlappt, insbesondere wobei die Ausnehmung (26) im zweiten Tellerabschnitt (11) umlaufend ausgeformt ist.

7. Ventil nach einem der Ansprüche 1 bis 6,
**dadurch gekennzeichnet, dass**
der erste Tellerabschnitt (9) ringförmig ausgebildet ist und der Durchmesser der äusseren Begrenzung (9a) des ersten Tellerabschnitts (9) grösser ist als der Durchmesser der ersten Auflagefläche (15) des ersten Tellerabschnitts (9).

8. Ventil nach einem der Ansprüche 1 bis 7,
**dadurch gekennzeichnet, dass**
• das Ventilgehäuse (1) auf einer zweiten Seite (21) eine zweite Wand (6) aufweist, die in beabstandeter, im Wesentlichen paralleler Gegenüberlage zur ersten Wand (2) und zur ersten Öffnung (3) eine zweite Öffnung (7) für den Fliessweg (F) aufweist,
• die zweite Wand (2) eine insbesondere die zweite Öffnung (7) umschliessende zweite Auflagefläche (24) aufweist und
• die zweite Auflagefläche (24) und der zweite Tellerabschnitt (11) zur Begrenzung der relativen linearen Beweglichkeit des zweiten Tellerabschnitts (11) in Richtung zur zweiten Seite (21) und zur zweiten Öffnung (7) derart angeordnet und ausgebildet sind, dass in der Geschlossenstellung (C) der zweite Tellerabschnitt (11) bei auf der zweiten Seite (21) der zweiten Öffnung (7) herrschendem relativem Unterdruck (25) in der ausgefahrenen Stellung (B) mit einer Anschlagfläche (27) in Richtung zur zweiten Seite (21) auf der zweite Auflagefläche (24) aufliegt.

9. Ventil nach einem der Ansprüche 1 bis 8,
**dadurch gekennzeichnet, dass**
der mindestens eine Antrieb (12) derart ausgebildet ist, dass der Ventilteller (8) zwischen
• der Offenstellung (O), und
• der Zwischenstellung (I),
mittels der Querbewegung (x) schwenkbar oder verschiebbar ist und zwischen
• der Zwischenstellung (I),
• der Geschlossenstellung (C) und
• einer Initialisierungsstellung (N), in welcher der Abstand des ersten Tellerabschnitts (9) zur zweiten Wand (6) derart reduziert ist, dass der zweite Tellerabschnitt (11) mit seiner Anschlagfläche (27) auf der zweite Auflagefläche (24) aufliegt und vollständig in die eingefahrene Stellung (A) geschoben ist,
mittels der Längsbewegung (y) verschiebbar ist, wobei die Zwischenstellung (I) zwischen der Geschlossenstellung (C) und der Initialisierungsstellung (N) liegt.

10. Ventil nach einem der Ansprüche 1 bis 9,
**dadurch gekennzeichnet, dass**
eine Steuerung, die derart ausgebildet ist und mit dem Antrieb (12) in derartiger Verbindung steht, dass der Ventilteller (8)
zum gasdichten Unterbrechen des Fliesswegs (F)
• mittels der Querbewegung (x) des Antriebs (12)
- von der Offenstellung (O)
- in die Zwischenstellung (I)
und
• mittels der Längsbewegung (y) des Antriebs (12)
- von der Zwischenstellung (I)
- in die Geschlossenstellung (C)
und zum vollständigen Öffnen des Fliesswegs (F)
• mittels der Längsbewegung (y) des Antriebs (12)
- von der Geschlossenstellung (C), in welcher sich der zweite Tellerabschnitt (11) in einer beliebeigen Stellung zwischen der eingefahrenen Stellung (A) und der ausgefahrenen Stellung (B) befindet,
- über die Initialisierungsstellung (N) zum vollständigen Schieben des zweiten Tellerabschnitts (11) in die eingefahrene Stellung (B)
- in der Zwischenstellung (I)
und
• mittels der Querbewegung (x) des Antriebs (12)
- von der Zwischenstellung (I)
- in die Offenstellung (O)
verstellbar ist.

11. Ventil nach einem der Ansprüche 1 bis 10,
**dadurch gekennzeichnet, dass**
die erste Dichtung (10) auf der ersten Auflagefläche (15) des ersten Tellerabschnitts (9) zum Herstellen des axial dichtenden Kontakts mit der Dichtfläche (14) des Ventilsitzes (5) fixiert ist.

12. Ventil nach einem der Ansprüche 1 bis 11,
**dadurch gekennzeichnet, dass**
die zweite Dichtung (18)
• auf der Innenfläche (16) des ersten Tellerabschnitts (9) zum Herstellen des radial dichtenden Kontakts mit der Aussenfläche (17) des zweiten Tellerabschnitts (11) oder
• auf der Aussenfläche (17) des zweiten Tellerabschnitts (11) zum Herstellen des radial dichtenden Kontakts mit der Innenfläche (16) des ersten Tellerabschnitts (9)
fixiert ist.

13. Ventil nach einem der Ansprüche 1 bis 12,
**dadurch gekennzeichnet, dass**
der erste Tellerabschnitt (9) mit dem mindestens einen Antrieb (12) über einen derart seitlich an dem ersten Tellerabschnitt (9) angeordneten, sich senkrecht zur Öffnungsachse (4) erstreckenden Arm (28) verbunden ist, dass sich der Arm (28) in der Geschlossenstellung (C) ausserhalb des entlang der Öffnungsachse (4) geometrisch projizierten Öffnungsquerschnitts der ersten Öffnung (3) befindet.

14. Ventil nach einem der Ansprüche 1 bis 13,
**dadurch gekennzeichnet, dass**
• der erste Tellerabschnitt (9) ringförmig ausgebildet ist,
• der zweite Tellerabschnitt (11) die Form einer geschlossenen Kreisscheibe aufweist,
• die Innenfläche (16) und die Aussenfläche (17) geometrische Kreiszylindermantelflächen sind und
• die Dichtfläche (14) und die erste Auflagefläche (15) geometrische Ringflächen sind.

15. Ventil nach einem der Ansprüche 1 bis 14,
**dadurch gekennzeichnet, dass**
• das Ventil als ein Pendelventil ausgebildet ist und
• der Antrieb (12) derart ausgebildet ist, dass der Ventilteller (8) mittels der Querbewegung (x) im Wesentlichen parallel über den Querschnitt der ersten Öffnung (3) und senkrecht zur Öffnungsachse (4) schwenkbar ist.
